# EUROPEAN PATENT APPLICATION

(11) **EP 1 152 307 A1**
(43) Date of publication of application: **07.11.2001**
(21) Application number: 00201549.3
(22) Date of filing: 28.04.2000
(51) Int. Cl.: G05B 19/042

(54) **A method for converting information related to the hardware/software configuration of a distributed control system**

(71) Applicant: ABB Research Ltd., 8050 Zürich (CH)
(72) Inventor: Fay, Alexander, 69221 Dossenheim (DE); Kirmair, Stefan, 69120 Heidelberg (DE); Merker, Stephan, 68723 Schwetzingen (DE); Villa, Valerio, 22020 Gironico (Co) (IT)
(74) Representative: Giavarini, Francesco

(57) **Abstract**

The present invention relates to method for converting first information having a first format provided with a first syntax and with a first semantics for describing the hardware/software configuration of a first distributed control system, into second information having a second format provided with a second syntax and with a second semantics for describing the hardware/software configuration of a second distributed control system,

## Description

The present invention relates to a method for converting information related to the hardware/software (HW/SW) configuration of a distributed control system (DCS).

More particularly, the present invention relates to a method for converting first information having a certain format for describing a first DCS HW/SW configuration, into second information having another format for describing a second DCS HW/SW configuration.

Distributed control systems are largely used in the state of the art with the purpose of controlling industrial processes. Particularly, distributed control systems have been conceived with the purpose of coping with the intrinsic distributed nature of said industrial processes, through a physical distribution of control units, which can communicate and exchange data/information.

A DCS can process the data/information acquired from the process and can produce command signals for controllers, which can interface to the process and determine its physical behaviour, so as to guarantee the satisfaction of certain predefined requirements.

Any DCS is typically described by information (data, specifications, program documentation and the like) regarding its particular HW/SW configuration. This information typically comprises:
- information regarding the number, the type and the configuration of the controllers included in the DCS; and/or
- information regarding the number, the type and the configuration of the input/output (I/O) boards connected to the controllers; and/or
- information regarding the number, the type and the configuration of the specific devices, which are used for establishing a communication between the controllers; and/or
- information regarding the number, the type and the configuration of the devices, which are used for supervising the controllers; and/or
- information regarding the behaviour of the controllers: this information generally comprises the programs that are run by the DCS controllers and other requirements concerning, for example, the timing of said programs; and/or
- information tags, which are useful for identifying various elements of a DCS.

As mentioned above, the information for describing a DCS HW/SW configuration is characterised by a proper format, which is provided with a proper syntax and a proper semantics. The term "syntax" and the term "semantics" respectively mean a set of codification rules and a set of functional relationships and rules, characterising an information format.

As technology proceeds, a DCS might become obsolete or, more generally, it might arise the need of controlling a certain industrial process with a different DCS, provided with more powerful hardware and software means.

In this case, it is necessary to make provision for stopping the process operation, installing and configuring the new DCS.

In order to minimise the DCS upgrade costs, the information related to the HW/SW configuration of the old DCS is generally reused. This fact implies to reuse technical solutions that have already been tested during the years and, therefore, ensuring a high level of reliability for the process control.

Obviously, these technical solutions could certainly be improved but, at this point, the effort for upgrading the old DCS is certainly reduced if compared with the effort that would be needed for generating "ex novo" the information regarding the HW/SW configuration of the new DCS.

Unfortunately, although the process behaviour remains the same, due to the fact the DCS is physically changed, there is only a little chance of reusing the information related to the HW/SW configuration of the old DCS, as it is.

The incompatibility between the new and the old DCS HW/SW configuration forces the engineers to reprocess the information regarding the old DCS HW/SW configuration, so as to being able to reconfigure the new DCS.

In practice, the information regarding the old HW/SW configuration is converted into information, which is useful for describing the HW/SW configuration of the new DCS.

A traditional approach for performing this information conversion is to use mapping tables, which allow establishing logic links between the elements of the old DCS and the elements of the new DCS. In practice, these mapping tables represent a guide, which allows creating the elements of the new DCS configuration, basing on the elements of the old DCS configuration.

This traditional approach suffers from several drawbacks.

In fact, the conversion of the information is generally realised in a manual fashion. Although the use of the mentioned mapping tables certainly represents a relief in the conversion process, the common practice has shown that the requested manual work implies relevant negative consequences in terms of consistency and completeness of the information conversion.

Moreover, the activity of manually and repetitively interacting with said mapping tables might be a tremendous source of trivial mistakes which, in most cases, can be checked with great difficulty. This fact can have negative consequences when the new DCS is installed and commissioned.

The probability of making trivial mistakes is further increased by the fact that the amount of information to translate may actually be, in many cases, very huge. In fact, it should be considered that a DCS system of normal size generally comprises several controllers, thousands of signals to exchange and thousands of function blocks.

Therefore a big amount of time is needed for performing the information conversion: this fact impacts negatively the costs for upgrading the DCS system.

In order to try to solve these drawbacks, some methods of the state of the art make use of computerised tools that aim at speeding up the conversion operations.

Said computerised tools are generally aim at performing the conversion of the information regarding the input/output configuration of single elements of the old DCS or, very often, aim at converting the software programs that are run by said single elements of the old DCS.

In practice, such computerised tools can be considered as partially embedding the mapping tables mentioned above, used in the more traditional approaches.

Although these methods certainly relieve engineers from part of the conversion work amount it is not possible to consider them as a satisfactory solution for the technical problems above described.

In fact, it should be considered that a DCS is characterised by the presence of a large amount of hidden logical links, between the elements of its HW/SW configuration. Said links can pertain to very different aspects of the DCS and are essential for a good operation of the DCS.

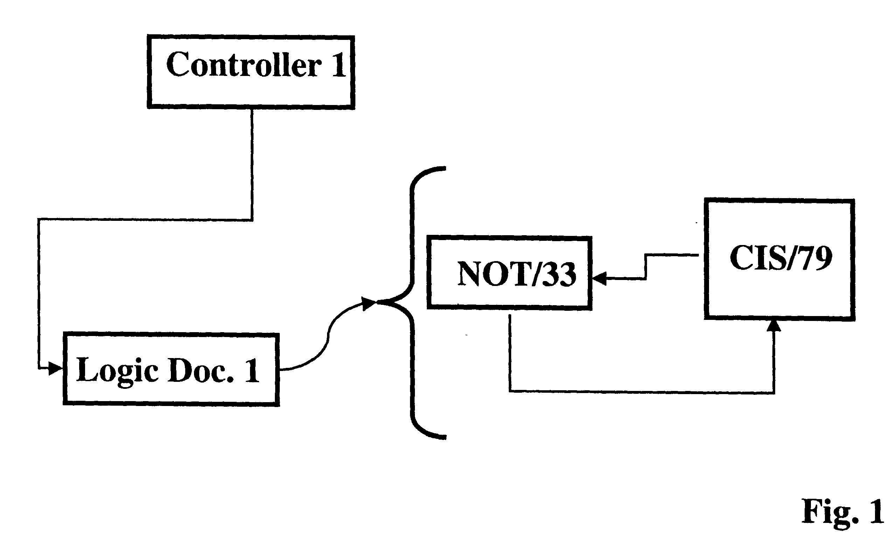

In order to understand better this concept, reference should be made to figure 1, which illustrates a piece of information representing a small portion of the HW/SW configuration of a DCS of the state of the art.

In figure 1, it is represented a controller, which comprises the functional logic blocks named as "CIS/79" and "NOT/33". As it appears from figure 1, visible communication links between said two blocks exist. But, the presence of the functional block "CIS/79" implies the existence of an I/O board having some analog/digital inputs/outputs.

So, although these links are not represented in the piece of information represented in figure 1, they are implicitly hidden and they are equally important for ensuring the correct functionality of the controller. It appears evident that the task of maintaining the consistency of said hidden links is critical during the conversion process.

Unfortunately, the use of the computerised tools of the state of the art can hardly accomplish this task, due to their capabilities that are intrinsically restricted to particular elements the DCS HW/SW configuration.

Therefore, a cumbersome amount of manual work is still needed, at least for recovering the hidden links that are characteristic of each DCS HW/SW configuration. This fact means that the mentioned drawbacks are still relevant and basically unsolved, in the common practice.

The HW/SW configuration information conversion methods of the state of the art are affected by another important drawback.

It should be considered that the technology of the components of the new DCS might be different from the one used for the old DCS.

So the HW/SW configuration information of the old DCS, which is obtained by means of the mere conversion of HW/SW configuration information of the old DCS, might not ensure optimal performances for the new DCS.

This fact means that the optimisation of the information, during the conversion process, can be a critical task, for minimising the installation and commissioning time of the new DCS.

Unfortunately, in the known methods of the state of the art, the optimisation of the new DCS HW/SW configuration information is generally made after the conversion of the old DCS HW/SW configuration information. This fact is due to many reasons that can be, for example, due to the "monolithic" nature of the approaches that are generally adopted. This "monolithic" nature is generally related to the fact that the used computerised tools generally do not front the task of converting the DCS HW/SW configuration as a whole, but they just aim at accomplishing conversion tasks that are restricted to specific aspects of the DCS HW/SW configuration.

Said "monolithic" approaches make difficult to establish a satisfactory level of interactivity between the user and the information flow, during the information conversion process. Consequently, installation and commissioning costs of the new DCS are not remarkably reduced.

The main aim of the present invention is to provide a method, which allows performing the conversion of the information related to a DCS HW/SW configuration, reducing to a negligible level the drawbacks that have been described above.

Within this scope, another object of the present invention is to provide a method, which allows performing the conversion of the information, related to a DCS HW/SW configuration, with a high level of interactivity, so as to be able to optimise the information content, during the conversion process.

Another object of the present invention is to provide a method, which allows performing the conversion of the information related to a DCS HW/SW configuration in a consistent and complete manner, reducing to a negligible level the loss of the logical hidden connections linking different elements of the DCS.

Another object of the present invention is to provide a method, which allows performing the conversion of the information related to a DCS HW/SW configuration of different DCS systems, independently of their specific structure and configuration.

Not the least object of the present invention is to provide a method, which can be relatively easy embedded on a computerised environment, so as to allow obtaining at least a partially automatic execution of said method.

Thus, the present invention provides a method for converting first information having a first format provided with a first syntax and with a first semantics for describing the hardware/software configuration of a first distributed control system. The method, according to the present invention converts said first information into second information having a second format provided with a second syntax and with a second semantics for describing the hardware/software configuration of a second distributed control system. The method, according to the present invention, is characterised in that it comprises the phases of:
a) importing said first information into a computerised environment; and
b) converting said first information into third information, said third information comprising:
   - a first portion of information having a third format provided with a third syntax and with a third semantics for describing the hardware/software configuration of a virtual distributed control system, the hardware/software configuration of said virtual distributed control system being at least partially independent of the hardware/software configuration of said first and second distributed control systems; and
   - a second portion of information having a fourth format provided with said third syntax and with said first semantics for describing the hardware/software configuration of said virtual distributed control system;
c) processing said first portion of third information and said second portion of third information in order to obtain respectively:
   - a third portion of third information, the format of said third portion of third information being equivalent to said third format; and
   - a fourth portion of third information having a fifth format provided with said third syntax and with said second semantics;
d) converting:
   - said third portion of third information into a first portion of said second information, the format of said first portion of second information being equivalent to said second format; and
   - said fourth portion of third information into a second portion of said second information, the format of said second portion of second information being equivalent to said second format;
e) exporting said second information out of said computerised environment.

The method, according to the present invention allows achieving the main aim of the present invention.

The method, according to the present invention, performs an indirect conversion of the information related to the hardware/software configuration of the old DCS.

In fact, in a first instance the information related to the HW/SW configuration of the old DCS into information having a "neutral " format, and, subsequently, said information having a neutral format is converted into information having a format, which depends on the new DCS configuration.

All the elements of the old DCS configuration are, in practice, represented, during the conversion process, in a "neutral" format, which is characterised by proper syntax and proper semantics.

It should be noticed that also the visible and hidden links among the DCS elements can be considered "per se" as DCS elements and can be represented in said neutral format. So, they can be converted and handled, minimising the possibilities of missing them during the conversion process.

In this manner, the conversion process pertains to the information related to the old DCS configuration, taken as a whole.

Moreover, the method according to the present invention allows obtaining a separation between the "source" (the HW/SW configuration of the first DCS) and the "target" (the HW/SW configuration of the second DCS) of the information flow.

This fact together with other mentioned advantages allows achieving a high level of consistency and the reliability of the conversion, minimising the need of a human intervention.

Furthermore, an important characteristic of the method according to the present invention is that it is possible to process the information when it is converted in the "neutral" format. This allows optimising the information content and, in practice, restructuring the information in the "neutral" before the final conversion into the information related to the new DCS HW/SW configuration. This fact implies a relevant reduction of the upgrading costs of the DCS. For a better understanding of the present invention, reference may be had to the detailed description reported hereinafter, taken in conjunction with the accompanying drawings in which:
figure 1 represents a block diagram, which schematically illustrates a piece of information representing a portion of the hardware/software configuration of a DCS of the state of the art;
figure 2 represents a second block diagram, which schematically illustrates a sequence of phases/steps included in the method according to the present invention;
Figure 3, represents a second block diagram, which schematically illustrates a preferred sequence of phases/steps of the method according to the present invention;
figure 4 represents a second block diagram, which schematically illustrates another preferred sequence of phases/steps included in the method according to the present invention;
figure 5 represents a second block diagram, which schematically illustrates another preferred sequence of phases/steps included in the method according to the present invention;
figure 6 represents a second block diagram, which schematically illustrates another sequence of phases/steps included in the method according to the present invention;

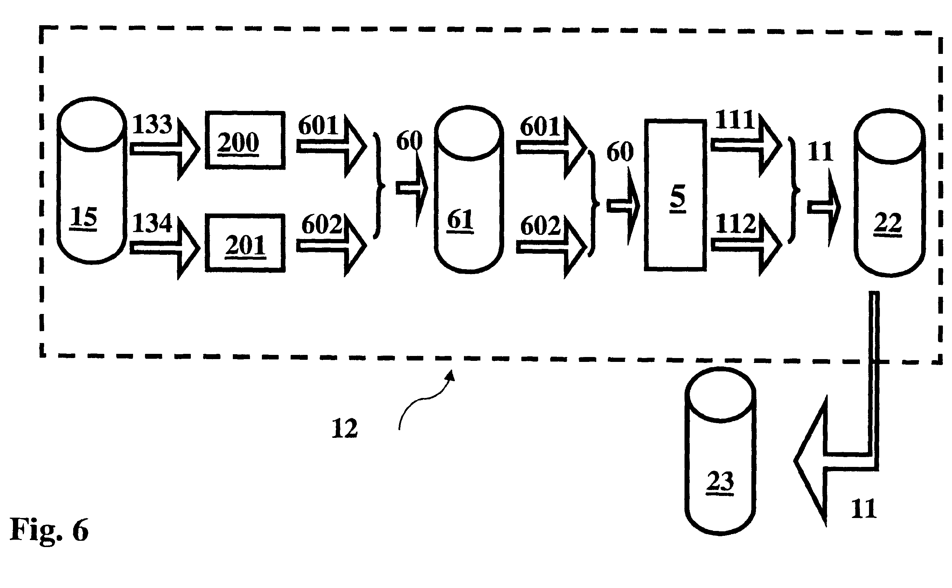

Referring to the mentioned figures, the method according to the present invention executes a conversion of first information 10, which has a first format for describing the HW/SW configuration of a first DCS (not shown). The information 10 is converted into second information 11 (see figure 6), which has a second format for describing the HW/SW configuration of a second DCS (not shown).

Referring now specifically to figure 1, the method according to the present invention comprises the phase a) of importing the first information 10 into a computerised environment (dashed block 12).

In a preferred embodiment of the method, according to the present invention, the phase
a) can comprise the step a.1) of acquiring the first information 10 from second storage means 20 (for example a database). The second storage means 20 are advantageously included in first computerised tools (not shown) that are used for engineering and configuring the first DCS. Subsequently, the phase a) can provide the step a.2) of storing the first information 10 into third storage means 21 (for example a database) included in the computerised environment 12.

In practice, the steps a.1) and a.2) provide a direct acquisition of information from a computerised system, which is used for engineering and configuring the first DCS. This embodiment, which can be easily implemented through a suitable computerised interface, is particularly advantageous because it allows importing information, remarkably reducing the needed amount of human work. At step a.3) of the phase a), the first information 10 is preferably acquired from the third storage means 21, so as to make it available for the subsequent phases of the method according to the present invention.

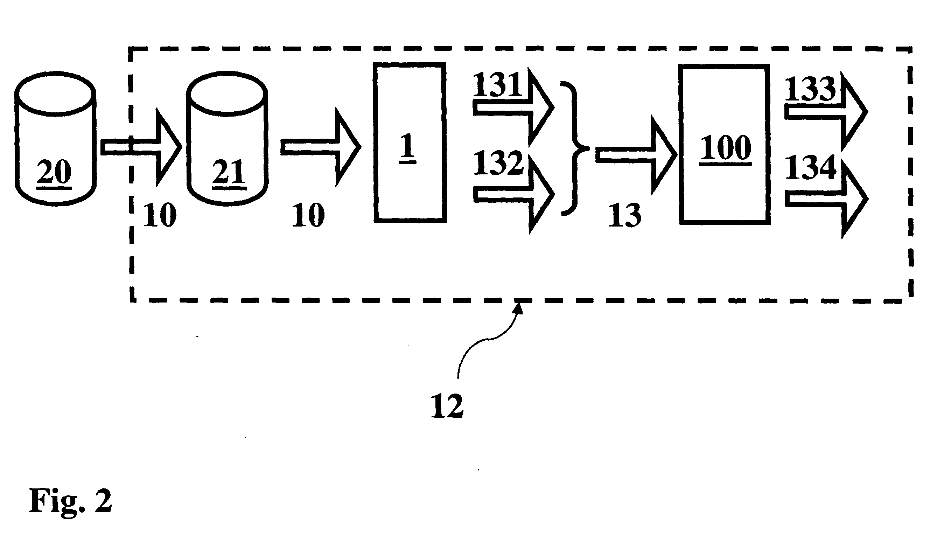

At the phase b), the method, according to the present invention, provides the conversion (block 1 of figure 2) of the first information 10 into third information 13. The third information 13 comprises a first portion of information 131 having a third format provided with a third syntax and with a third semantics for describing the hardware/software configuration of a virtual distributed control system. The third information 13 also comprises a second portion 132 of information, which has a fourth format provided with said third syntax and with said first semantics for describing the virtual DCS HW/SW configuration. The second portion 132 of the information 13 is generated if there are some pieces of the first information 10, for which the semantics conversion is particularly difficult. This may happen in case of conversion of the information related to very complicated elements of the DCS HW/SW configuration, such as, for example, huge "PID" controllers or the like. In fact, the first semantics comprised in the mentioned first format of the first information 10 might be not compatible with the third semantics comprised in the mentioned third format of the third information 13.

In this case, due to the need of avoiding a heavy conversion process, the conversion of the semantics is not performed but only the syntax is converted.

The practice has shown that, generally, the amount of pieces of information that are difficult to translate is small in comparison to the whole amount of the information 10. In spite of this, they can remarkably delay the conversion process. Moreover, for the conversion of said "complicated" pieces of information the third format of the information 13 should include semantics rules that are rarely used and that are very specific for a certain DCS. This would provoke a remarkable consumption of processing resources in the practical implementation of the method according to the present invention.

The generation of the second portion 132 of the information 13 is therefore a quite useful "shortcut" for making the method according to the present invention more flexible and more easy to implement.

In any case, the amount of information included in both the first and second portion of pieces of information 13 can vary (from 0% to the 100%), according to the needs. This means that, in extreme situations, the first portion 131 of the information 13 or the second portion 132 of information 13 may be void.

As mentioned above, the HW/SW configuration of the virtual DCS is at least partially independent of the HW/SW configuration of the first and second distributed control systems.

The representation of the HW/SW configuration of the virtual DCS might be obtained in various manners. In a preferred embodiment of the method, according to the present invention, the third information 13 describes the HW/SW configuration of a virtual DCS through the combination of different sets of information. Each set of information comprises pieces of information that are related to non-overlapping aspects of the hardware/software configuration of the virtual DCS.

In this manner, the HW/SW configuration of the virtual DCS is described combining sets of information, which are substantially "orthogonal". Also the implicit relationships, hidden in the HW/SW configuration of the first DCS, can be easily represented and, therefore, converted reducing to negligible levels the probability of missing information.

Referring again to the example of figure 1, all the hidden links that are implicit in the represented piece of information (i.e. the existence of an I/O board having some analog/digital inputs/outputs) can be retrieved and split. Moreover, they can be represented, according to said third format, as separated elements.

It should be noticed that said "orthogonal" representation is present both in the first portion 131 and second portion 132 of the third information 13.

Only the semantics of said portions of third information are differentiated.

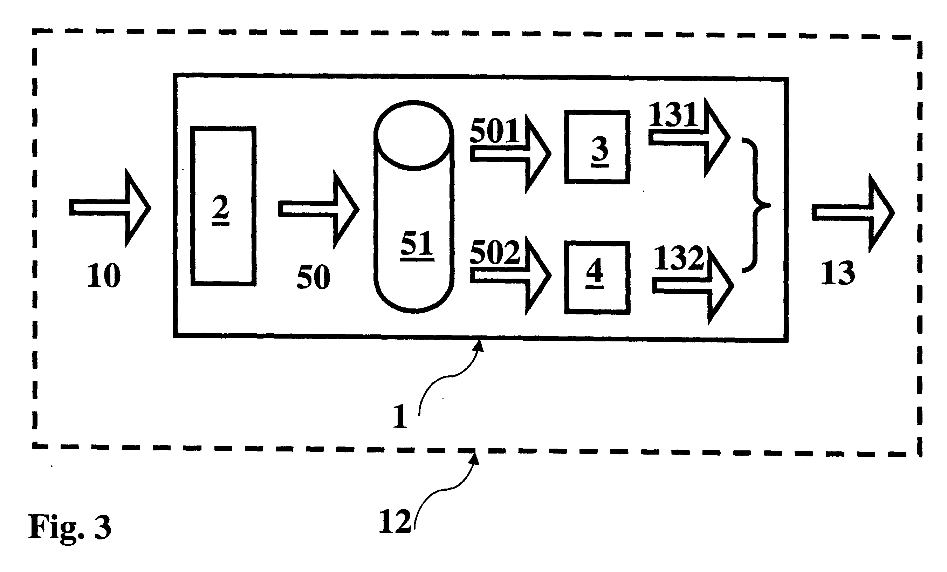

A preferred embodiment of the method according to the present invention is illustrated in figure 3. According to this embodiment, the phase b) comprises a preferred sequence of steps for performing the conversion of the information 10. Preferably, the phase b) provides the step b.1) of converting (block 2) the first information 10 into a first intermediate information 50 having a first intermediate format, which is provided with said third syntax and with said first semantics. Subsequently, at step b.2), the first intermediate information 50 is stored into first intermediate storage means 51. The first intermediate storage means 51 are obviously comprised in said computerised environment and can be represented, for example, by a database. At step b.3) the first intermediate information 50 is acquired from said first intermediate storage means 51. Then, the step b.4) of selecting a first portion 501 of the first intermediate information 50 and converting the first portion 501 into the first portion 131 of the third information 13 is provided.

In practice, the first portion 501 is the portion of the first intermediate information 50, the first semantics of which can be converted, without any difficulty, into said third semantics.

Accordingly, the method according to the present invention provides the step b.5) of selecting a second portion 502 of the first intermediate information 50 and converting said portion 502 into the second portion 132 of third information 13. As it is possible to understand, the second portion 132 comprises the pieces of information 50, which are "complicated" to convert and which should be shortcut.

The sequence of steps of phase b) is particularly advantageous also for other reasons.

In fact, it allows obtaining a logical and a temporal separation of the syntax and semantics conversion. This fact makes the method according to the present invention certainly more reliable and much easier to manage.

Referring again to figure 2, the method, according to the present invention, provides the phase c) of processing (block 100) the first portion 131 and the second portion 132 of the third information 13. The phase c) aims at obtaining a third portion 133 and a fourth portion 134 of the information 13, respectively.

The third portion 133 of the third information 13 has a format, which is substantially equivalent to said third format, while the second portion 134 of the third information has a fifth format, which is provided with said third syntax and with said second semantics.

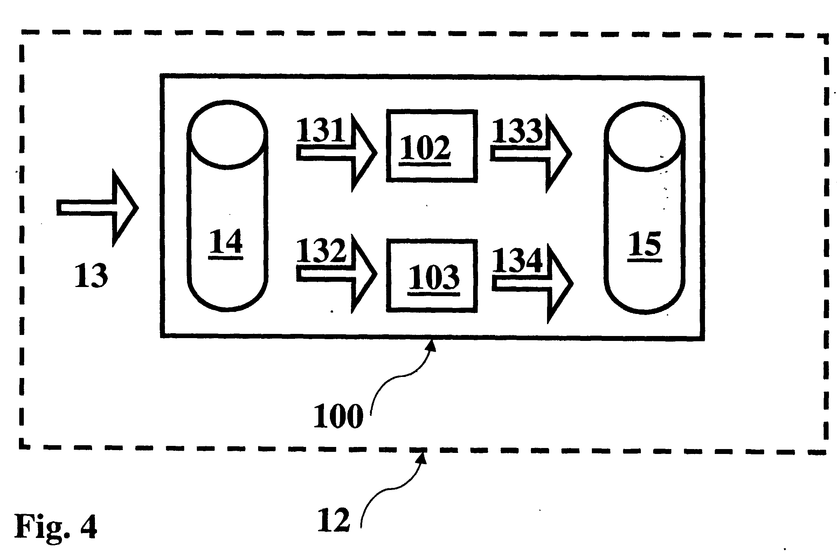

Referring now to figure 4, it is illustrated a block diagram representing a preferred sequence of steps for the phase c).

Initially, The step c.1) of storing the third information 13 into first storage means 14, included in the computerised environment 12, can be provided. At step c.2), from the storage means 14 both the first portion 131 and the second portion 132 of the third information 13 are acquired.

Subsequently, the phase c) provides the step c.3) of processing (block 102) the first portion 131 of the third information 13. The processing of said first portion 131 advantageously consists in an optimisation of the information content of the first portion 131 of the third information 13. This allows obtaining the third portion 133 of the third information 13.

The optimisation of the information content of the first portion 131 of the third information 13 can concern all the aspects that characterised a DCS HW/SW configuration. As mentioned above, these HW/SW configuration aspects can involve the number and the type of controllers, the number and the type of input/output boards and the like.

The optimisation can be performed at a software level and, for example, can focus in the elimination of program/data structures, which, without having any relevant effect on the DCS behaviour, might be too redundant or too heavy to manage. Other kinds of information content optimisation, at a software level, may concern modifications of the abstraction level of certain control programs or simplifications of unconnected inputs.

Moreover, the optimisation of the content of the portion 131 of the third information 13 can be performed at a hardware level.

In this case, the optimisation may consist of merging digital inputs/outputs, merging controller blocks, of optimising inter-block communication. Furthermore, the phase c) advantageously comprises the step c.4) of processing (block 103) the second portion 132 of the third information 13 in order to obtain the fourth portion 134 of the third information 13. This is preferably performed by means of a conversion of said first semantics of the first portion 132 of the third information 13 into said second semantics of the fourth portion 13 of the third information 13.

In practice, said portion 132 of the information 13 is subjected to a processing of the first semantics, which is directly converted into said second semantics. This can be particularly useful, because it makes the method according to the present invention particularly flexible and adaptable to very different situations.

For example, in case of advanced "PID" controllers in the first DCS HW/SW configuration it is better to provide a "direct" conversion of format semantics rather than going through a "neutral" representation.

Finally, the phase c) can comprise the step c.5) of storing the third portion 133 of the third information 13 and the fourth portion 134 of the third information 13 into second storage means 15, included in the computerised environment 12. It should be noticed that, in the sequence of steps of the phase c) described above, the processing steps (blocks 102 and 103) of the first portion 131 and the second portion 132 of the third information 13 are executed according to a substantially parallel mode.

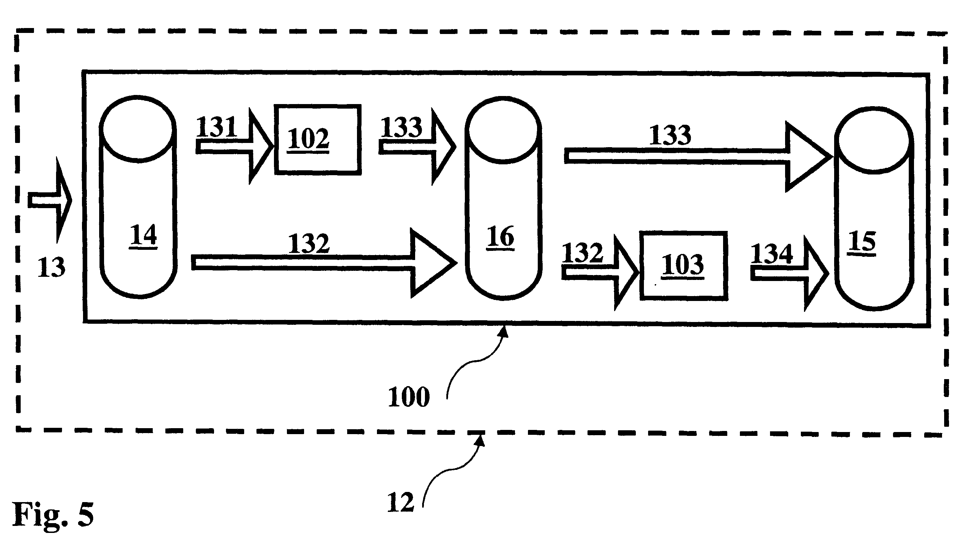

Referring to the figure 5, the phase c) can comprise an alternative sequence of steps, in which the processing steps of the first portion 131 and the second portion 132 of the third information 13 are executed according to a substantially serial mode. According to this embodiment of the present invention, the phase c) can initially comprise the three steps above named as c.1), c.2) and c.3) (block 102). Subsequently the phase c) provides the step c.6) of storing the third portion 133 and the second portion 132 of the third information 13 into third storage means 16, included in the computerised environment 12. Then, the step c.7) of acquiring the third portion 133 and the second portion 132 of the third information 13 from the third storage means 16 is provided. Subsequently the step c.4) (block 103) and the step c.5), above described, can be provided.

Referring to the figure 6, the method, according to the present invention, comprises the phase d) of converting the third portion 133 and the second portion 134 of the third information 13 respectively into the first portion 111 and the second portion 112 of the second information 11. Both the first portion 111 and the second portion 112 of the second information 11 have a format, which is substantially equivalent to the second format of the information 11.

The phase d) preferably provides a sequence of steps, which are substantially similar to the sequence of steps, concerning the phase b), described above.

Preferably (see figure 6) the phase d) provides the step d.1) of converting (block 200) the third portion 133 of the third information 13 into a first portion 601 of a second intermediate information 60. The format of the first portion 601 of the second intermediate information 60 is provided with said third syntax and with said second semantics. In practice, the conversion of the semantics related to the format of the third portion 133 of the third information 13 is provided. Accordingly, the phase d) can provide also the step d.2) of converting (block 201) the fourth portion 134 of the third information 13 into a second portion 602 of the second intermediate information 60. The step d.2) does not affect the format of the second portion 602 of the second intermediate information 60. In fact, due to the above mentioned "direct conversion", which is provided by the phase c), the semantics of the second portion 602 of the second intermediate information 60 can be kept constant and, therefore, it is provided with said third syntax and with said second semantics.

The phase d) provides also the step d.3) respectively the first portion 601 and the second portion 602 of the second intermediate information 60 into the second intermediate storage means 61, that are included in the computerised environment 12.

Then, the phase d) provided the step d.4) of acquiring the second intermediate information 60 from the second intermediate storage means 61. It should be noticed that, at this point, the first portion 601 and the second portion 602 of the second intermediate information 60 have the same second intermediate format and, therefore, they can be considered as a whole.

Finally, the phase d) can comprise the step d.5) of executing (block 5) the conversion of the second intermediate information 60 into the second information 11. This means that, logically, the first portion 601 and the second portion 602 of the second intermediate information 60 are converted into a first portion 111 and a second portion 112 of the second information 11.

As it is possible to understand, the advantages of this embodiment of the present invention mainly consist in the logical and the temporal separation of the syntax and semantics conversion, which allows obtaining a major "clearness" of the conversion process.

The method according to the present invention provides also the phase e) of exporting the second information 11 out of the computerised environment 11.

Preferably, the phase e) comprises the step e.1) of storing the second information 11 into sixth storage means 22, included in the computerised environment 12. Subsequently, the step e.2) of acquiring the second information from the sixth storage means 21 and the step e.3) of storing the second information 11 into seventh storage means 23 can be provided. The seventh storage means 23 are advantageously included in second computerised tools (not shown) used for engineering and configuring the second DCS.

Also this embodiment of the method, according to the present invention, is particularly advantageous due to the fact that it provides the export of the information 11 remarkably reducing the needed amount of human work. Moreover, the second information 11 is made available to the computerised tools that are used for engineering and configuring the second DCS.

The method according to the present invention has proven to be of easy practical implementation.

In fact, the computerised environment 12 can be considered as a computerised framework for implementing the method according to the present invention.

The computerised environment 12 can be realised in practice using computerised tools that are available in the state of the art. Particularly, a personal computer running a suitable multitasking operating system provided with windowing GUI (Graphical User Interface) capabilities might be used. Moreover, a Java virtual machine adapted for said multitasking operating system might be also advantageously used.

In a preferred embodiment of the method, according to the present invention, one or more of the phases from a) to e) can be activated, according to adjustable sequences, by first computerised means (not shown), included in the computerised environment 12. The first computerised means can be represented, for example, by a first suitable programmable computerised interface, available the computerised environment 12.

This embodiment is particularly advantageous because the user is allowed managing all the transitions of the information during the process flow. In particular, the various phases/steps of the method, according to the present invention, can be performed according to sequences that can be set by the user according to the needs. This fact implies remarkable advantages in terms of flexibility and applicability of the method according to the present invention.

These advantages are also more evident in another possible embodiment of the method according to the present invention. According to this embodiment, the computerised environment 12 comprises second computerised means (not shown) for logging the sequence of transitions to which a selected information item is subject during one or more of said phases from a) to e).

Obviously, the mentioned information item can be related to one or more aspects of the first or the second or the virtual DCS and therefore it can be selected from said first information and/or from said second information and/or from said third information.

In practice, the second computerised means allows selecting the information item according to a predefined set of descriptive attributes, Then, once the information item is selected, the second computerised means allows building data structures that keep track of the transitions to which said information item is subjected. For example, said data structures can comprise one or more so called "transition graphs", visible to the user, that allow describing the complete transition story of the selected item. Obviously, the user can modulate, through the second computerised means, the scope and the extension of the tracing activity.

Also the first computerised means are of easy practical implementation. They might be represented, for example, by a second suitable programmable computerised interface running in the computerised environment 12.

The method, according to the present invention, is susceptible of numerous modifications and variations, all of which are within the scope of the inventive concept. All the details may furthermore be replaced with other technically equivalent elements.

## Claims

1. A method for converting first information having a first format provided with a first syntax and with a first semantics for describing the hardware/software configuration of a first distributed control system, into second information having a second format provided with a second syntax and with a second semantics for describing the hardware/software configuration of a second distributed control system, **characterised in that** it comprises the phases of:
a) importing said first information into a computerised environment;
b) converting said first information into third information, said third information comprising:
- a first portion of information having a third format provided with a third syntax and with a third semantics for describing the hardware/software configuration of a virtual distributed control system, the hardware/software configuration of said virtual distributed control system being at least partially independent of the hardware/software configuration of said first distributed control system and said second distributed control system; and/or
- a second portion of information having a fourth format provided with said third syntax and with said first semantics for describing the hardware/software configuration of said virtual distributed control system;
c) processing said first portion of third information and said second portion of third information in order to obtain respectively:
- a third portion of third information, the format of said third portion of third information being equivalent to said third format; and/or
- a fourth portion of third information having a fifth format provided with said third syntax and with said second semantics;
d) converting:
- said third portion of third information into a first portion of said second information, the format of said first portion of second information being equivalent to said second format; and/or
- said fourth portion of third information into a second portion of said second information, the format of said second portion of second information being equivalent to said second format;
e) exporting said second information out of said computerised environment.

2. A method, according to the claim 1, **characterised in that** said phase c) comprises the steps of:
c.1) storing said third information into first storage means, included in said computerised environment;
c.2) acquiring said first portion of said information and said second portion of said information from said first storage means;
c.3) processing said first portion of said information in order to obtain said third portion of said information by means of an optimisation of the information content of said first portion of said information;
c.4) processing said second portion of third information in order to obtain said fourth portion of third information by means of a conversion of said first semantics of the first portion of third information into said second semantics of the fourth portion of third information;
c.5) storing said third portion of third information and said fourth portion of third information into second storage means, included in said computerised environment.

3. A method, according to the claim 2, **characterised in that** said phase c) comprises the additional steps of:
c.6) storing said third portion of third information and said second portion of third information into third storage means, included in said computerised environment;
c.7) acquiring said third portion of third information and said second portion of third information from said third storage means.

4. A method, according to the claims 2 and 3, **characterised in that** said additional steps c.6) and c.7) are executed between said step c.3) and said step c.4), respectively.

5. A method, according to one or more of the previous claims, **characterised in that** said phase a) comprises the steps of:
a.1) acquiring said first information from fourth storage means, said fourth storage means being included in first computerised tools used for engineering and configuring said first distributed control system;
a.2) storing said first information into fifth storage means, said fifth storage means being comprised in said computerised environment;
a.3) acquiring said first information from said fifth storage means.

6. A method, according to one or more of the previous claims, **characterised in that** said phase e) comprises the steps of:
e.1)storing said second information into sixth storage means, said sixth storage means being included in said computerised environment;
e.2)acquiring said second information from said sixth storage means;
e.3)storing said second information into seventh storage means, said seventh storage means being included in second computerised tools used for engineering and configuring said second distributed control system.

7. A method, according to one or more of the previous claims, **characterised by** the fact that said phase b) comprises the steps of:
b.1) converting said first information into a first intermediate information having a first intermediate format, said first intermediate format provided with said third syntax and with said first semantics;
b.2) storing said first intermediate information into first intermediate storage means, said first intermediate storage means being comprised in said computerised environment;
b.3) acquiring said first intermediate information from said first intermediate storage means;
b.4) selecting a first portion of said first intermediate information and converting said first portion of said first intermediate information into said first portion of third information;
b.5) selecting a second portion of said first intermediate information and converting said second portion of said first intermediate information into said second portion of third information.

8. A method, according to one or more of the previous claims, **characterised by** the fact that said phase d) comprises the steps of:
d.1) converting said third portion of third information into a first portion of a second intermediate information, the format of said first portion of said second intermediate format provided with said third syntax and with said second semantics;
d.2) converting said fourth portion of third information into a second portion of said second intermediate information, the format of said second portion of said second intermediate information provided with said third syntax and with said second semantics;
d.3) storing said first portion of said second intermediate information and said second portion of said second intermediate information into second intermediate storage means, said second intermediate storage means being comprised in said computerised environment;
d.4) acquiring said second intermediate information from said second intermediate storage means;
d.5) converting said second intermediate information into said second information.

9. A method, according to one or more of the previous claims, **characterised in that** said third information describes the hardware/software configuration of said virtual distributed control system through the combination of sets of information, said sets of information comprising pieces of information related to non-overlapping aspects of the hardware/software configuration of said virtual distributed control system.

10. A method, according to one or more of the previous claims, **characterised in that** one or more of said phases from a) to e) is activated, according to adjustable sequences, by first computerised means, said first computerised means being included in said computerised environment.

11. A method, according to one or more of the previous claims, **characterised in that** said computerised environment comprises second computerised means for logging the sequence of transitions to which a selected information item is subjected during one or more of said phases from a) to e).

12. A method, according to claim 11, **characterised in that** said information item is selected from said first information and/or from said second information and/or from said third information.

13. A method, according to claims 11 and 12 **characterised in that** said second computerised means build one or more data structures for keeping track of the transitions to which said information item is subjected.

14. A method, according to claim 13 **characterised in that** said data structures comprise one or more transition graphs, visible to the user.

15. A computerised tool, **characterised in that** it implements a method for converting first information having a first format provided with a first syntax and with a first semantics for describing the hardware/software configuration of a first distributed control system, into second information having a second format provided with a second syntax and with a second semantics for describing the hardware/software configuration of a second distributed control system, according to one or more of the previous claims.
